# EUROPÄISCHE PATENTSCHRIFT

(11) **EP 3 079 214 B1**
(45) Veröffentlichungstag und Bekanntmachung des Hinweises auf die Patenterteilung: **23.09.2020**
(21) Anmeldenummer: 16000596.3
(22) Anmeldetag: 12.03.2016
(51) Int. Cl.: H02G 9/06, H02G 3/08, H02G 9/10, H02G 3/22

(54) **VERSCHLUSSSTOPFEN FÜR EINEN KABELSCHACHT ODER EIN KABELVERLEGEROHR**
CLOSURE STOPPER FOR A CABLE SHAFT OR A CABLE LAYING TUBE
BOUCHON DE FERMETURE POUR PASSE-CABLES OU TUBE DE POSE DE CABLES

(30) Priorität: 11.04.2015 DE 102015004736
(43) Veröffentlichungstag der Anmeldung: 12.10.2016
(73) Patentinhaber: Langmatz GmbH, 82467 Garmisch-Partenkirchen (DE)
(72) Erfinder: Kärstedt, Stefan, 6108 Scharnitz (AT)
(74) Vertreter: Flosdorff, Jürgen

(56) Entgegenhaltungen:
- EP-A1- 2 533 089
- EP-A2- 0 862 254
- DE-A1- 10 140 714
- DE-A1-102011 018 758
- DE-U1-202008 007 905
- US-A- 3 260 794
- US-B1- 6 348 657
- Eisedicht: "Qualitätsprodukte für Ihre Gebäudeabdichtung - Lieferprogramm 2013", , 31 December 2013 (2013-12-31), XP055332953, Retrieved from the Internet: URL:http://www.eisedicht.cz/download/Liefe rprogramm 2013.pdf [retrieved on 2017-01-06]
- Eisedicht: "Qualitätsprodukte für Ihre Gebäudeabdichtung - Lieferprogramm 2013", , 31 December 2013 (2013-12-31), XP055332957, Retrieved from the Internet: URL:http://www.eisedicht.cz/download/Liefe rprogramm 2013.pdf [retrieved on 2017-01-06]

## Beschreibung

Die Erfindung betrifft einen Verschlussstopfen für einen Kabelschacht oder für ein Kabelverlegerohr, wobei der Verschlussstopfen einen Stopfenschaft und einen radial überstehenden Kopfabschnitt aufweist, der eine geschlossene Stirnwand hat.

Der Kabelschacht besteht vorzugsweise aus Kunststoff und hat in seinen seitlichen Wänden bevorzugt kreisförmige Wandabschnitte, die durch einen geschwächten Rand gegenüber den umgebenden Wandabschnitten begrenzt sind und die bei Bedarf heraus brechbar sind, um Durchführungsöffnungen für Rohre, Kabel etc. ins Innere des Schachtes zu bilden. Dabei müssen die so gebildeten Wandöffnungen gegen Versanden und Verschlammen des Kabelschachtes und der Kabelverlegerohre abgedichtet werden, wobei aber keine wasserdichte oder gar luftdichte Abdichtung erforderlich ist.

Die DE10140714 A1 offenbart eine hohle Tülle aus einem weichen Material, die mit ihrer Basis in einer Wandöffnung durch ein getrenntes Hartelement befestigt werden kann. Die Tülle enthält einen sich verjüngend geformten Schacht, der zur Aufnahme eines Kabelbaums bestimmt ist. Seitlich neben diesem Schacht befinden sich kleinere Dome, die an ihren oberen Enden durch Verschlusskappen verschlossen sind und durch die Kabel geführt werden können. Die Tülle hat keine geschlossene Stirnwand. Statt dessen ist in die Tülle eine Akkustikscheibe aus EPDM oder PU-Schaum eingesetzt, die eine zentrale Durchgangsöffnung hat, die durch Dichtlippen begrenzt ist. Hierdurch wird eine hervorragende Schalldämpfung im Bereich der Wandöffnung bewirkt.

Die EP2533089A1 offenbart eine Einrichtung zur axialen Verbindung, Abdichtung und/oder zum Verschließen von Rohren.

Die DE 10 2011 018 758 A1 offenbart einen Dichtstopfen, mit dem eine Wandöffnung eines Kabelschachtes oder ein Kabelverlegerohr abgedichtet werden kann. Der Dichtstopfen hat eine geschlossene Dichtmembran, die als Kopfabschnitt des Dichtstopfens radial über einen hohlen rohrförmigen Ansatz übersteht, wobei der rohrförmige Ansatz an seiner Außenseite mit Dichtringen versehen ist. Die Dichtmembran enthält mehrere Durchstoßzonen für Kabel oder dergleichen Gegenstände und Versteifungsstege, die die Durchstoßzonen voneinander separieren und die Dichtmembran verstärken. Durch die Unterteilung der Dichtmembran in mehrere Durchstoßzonen durch die Versteifungsstege soll sicher gestellt sein, dass für jedes Kabel eine separate Durchstoßzone zur Verfügung steht, so dass sich die Dichtmembran gut dichtend an den Kabelmantel anlegen kann. Der Dichtstopfen besteht aus einem Elastomer-Material, wobei die Versteifungsstege gegenüber dem Elastomer aus einem härteren Werkstoff bestehen.

Die DE 20 2008 007 905 U1 offenbart einen Stopfen mit membranartigen Flächenelementen an seiner Oberseite, an die sich napfartige Fortsätze anschließen, die sich in den ansonsten hohlen Stopfenschaft erstrecken. Der Stopfen besteht aus unterschiedlichen Materialien.

Die US 6,348,657 B1 offenbart eine Tülle, die an der Unterseite mehrere konische Aussparungen hat, die bei hohem Fluiddruck aufgeweitet werden, um einen dichten Sitz in einem Wasserbecken oder dergleichen hervorzurufen.

Der vorliegenden Erfindung liegt die Aufgabe zugrunde, einen einfachen Verschlussstopfen anzugeben, mit dem die Einführung von Micropipe-Bündel unterschiedlicher Durchmesser ins Innere eines Kabelschachtes abgedichtet und außerdem auch Kabelverlegerohre eines größeren Durchmessers verschlossen werden können, so dass auch derartige Rohre gegen Verschlammen und Versanden gesichert sind. Die Micropipe-Bündel haben dabei bevorzugt Durchmesser von ca. 25 mm oder ca. 50 mm, während die aufgeteilten Einzelkabel einen Durchmesser von ca. 12 mm haben können. Die Kabelverlegerohre haben üblicherweise einen Durchmesser von 110 mm. Der Verschlussstopfen soll insbesondere für die Abdichtung von Kabeln und Rohren dieser Durchmesser vorgesehen sein.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass durch den Stopfenschaft eine Vielzahl von sacklochförmigen Vertiefungen in axialer Richtung des Stopfens verlaufen, die von dem freien Ende des Stopfenschaftes ausgehen und vor der geschlossenen Stirnwand des Kopfabschnitts enden. Diese Vertiefungen haben unterschiedliche Querschnittsabmessungen, so dass Kabel oder Rohre unterschiedlicher Durchmesser an den Wänden der Vertiefungen abgedichtet werden können.

Weiter sieht die Erfindung vor, dass der Stopfen aus einem vorwiegend geschlossenzelligen oder -porigen Schaumstoff-Material besteht. Bei dieser Ausbildung können die Kabel oder Rohre in die Vertiefungen eingeführt werden und durch die geschlossene Stirnwand hindurch gedrückt werden, wobei sich das Schaumstoffmaterial dicht an das jeweilige Kabel oder Rohr anlegt. Es besteht auch die Möglichkeit, von der geschlossenen Stirnwand aus die jeweils benötigte Vertiefung zu öffnen, indem der Boden des Sacklochs mit einem Schneidwerkzeug ausgeschnitten wird.

Als Schaumstoffmaterial ist Neopolen besonders gut geeignet, da dieser Schaumstoff hochgradig elastisch ist, so dass sich ein durchgestossener Boden einer kleinen Sackbohrung nach dem Entfernen eines Kabels selbststätig wieder schließen kann. Neopolen ist zudem im Spritzgussverfahren hervorragend zu verarbeiten, so dass dieses Herstellungsverfahren für den erfindungsgemäßen Verschlussstopfen bevorzugt ist.

In weiteren Einzelheiten wird vorgeschlagen, dass der Stopfenschaft wenigstens zwei, vorzugsweise drei konzentrische größere Vertiefungen aufweist, deren Querschnittsabmessungen sich zu dem Kopfabschnitt hin stufenförmig verringert. Diese größeren Vertiefungen befinden sich vorzugsweise in der Mitte des Stopfenschaftes. Der geschlossene Boden der innersten dieser Vertiefungen hat bevorzugt eine Dicke von ca. 2 mm bis 5 mm und kann von einem zugehörigen Kabel bzw. Micropipebündel durchstoßen werden. Die ringförmigen Böden der stufenförmig größer werdenden Vertiefungen haben bevorzugt eine Dicke von ca. 15 und 30 mm, die auch jeweils ein paar Millimeter kleiner oder größer sein kann. Zum Hindurchführen der zugehörigen Kabel oder Micropipebündel sollten diese Böden der Sackbohrungen von der Stirnwand aus frei geschnitten werden.

Die Vertiefungen können eine Kreiszylinderform oder rechteckige, mehreckige oder ovale Querschnittsformen haben.

Die Durchmesser der größeren Vertiefungen betragen vorzugsweise ca. 48 mm, ca. 25 mm und ca. 12 mm, wobei der Durchmesser des Stopfenschaftes insgesamt ca. 110 mm betragen sollte, jedoch auch an andere Rohrdurchmesser angepasst werden kann, z.B. 50, 100, 125, 160, 200 ... (mm).

Weiter wird vorgeschlagen, dass radial außerhalb der oben erwähnten größeren Sackbohrungen mehrere kleine Sackbohrungen durch den Stopfenschaft verlaufen, die bevorzugt einen Durchmesser von etwa 6 mm haben und ca. 2 bis 4 mm vor der geschlossenen Stirnwand enden. Diese kleinen Sackbohrungen dienen der Durchführung und Abdichtung von Einzelkabeln bzw. aufgeteilten Micropipebündeln, die durch die Böden der Sackbohrungen durchgestoßen werden können. Dabei können ca. 24 kleine Sackbohrungen vorgesehen sein, die auf zwei konzentrischen Kreisen um die größeren Sackbohrungen angeordnet sein können.

Mit großem Vorteil wird vorgeschlagen, dass die geschlossene Stirnwand zwei konzentrische bevorzugt kreisförmige Markierungen aufweist, die mit den Rändern der beiden größten konzentrischen Vertiefungen fluchten. Die Markierungen können vorteilhafterweise durch Nuten in der Stirnwand gebildet sein.

Diese Markierung ermöglicht es auf einfache Weise, die Böden der beiden größten Vertiefungen von der Stirnwand her auszuschneiden. Auch für die innerste Vertiefungen kann eine solche Markierung vorgesehen sein, wobei der Boden der innersten Vertiefungen aber so dünn sein kann, dass er durchstoßen werden kann, ohne den Verschlussstopfen zu sehr zu beschädigen.

Wie bereits oben erwähnt, hat der Stopfenschaft bevorzugt einen Durchmesser von ca. 110 mm, so dass ein übliches Kabelverlegerohr, dessen Innendurchmesser etwas kleiner als 110 mm ist, in einem leichten Press-Sitz auf den Stopfenschaft aufgeschoben werden kann, womit das Kabelverlegerohr gegen Versanden und Verschlammen und weitestgehend auch gegen den Eintritt von Wasser gesichert ist.

Der Stopfenschaft und der Kopfabschnitt des Verschlussstopfens haben bevorzugt eine kreiszylindrische Form, wobei die aus den Schachtwänden herausbrechbaren Durchtrittsöffnungen eine zugehörige Kreisform mit einem Durchmesser haben, der ein paar Millimeter kleiner als 110 mm ist, so dass der Stopfenschaft an der Wand der Durchtrittsöffnungen mit einer geringen Vorspannung dicht anliegt und der Kopfabschnitt an der Innenwand des Schachtes anliegen kann. Der Verschlussstopfen kann aber auch eine andere Querschnittsform haben, wenn die Durchtrittsöffnungen, die der Verschlussstopfen abdichten soll, eine entsprechend andere Querschnittsform haben.

Weitere Einzelheiten der Erfindung ergeben sich aus der nachfolgenden Beschreibung mit Bezug auf die Zeichnungen. Dabei zeigen:

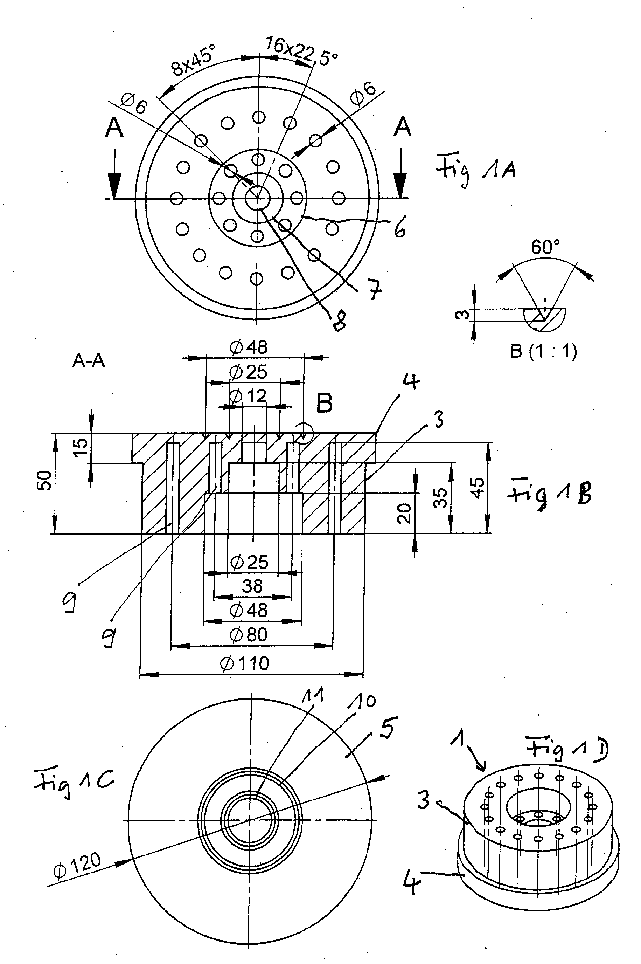

- Figur 1A bis 1D: eine rückwärtige Aufsicht, einen Längsschnitt, eine Stirnansicht und eine perspektivische Darstellung einer Ausführungsform des Verschlussstopfens;
- Figur 2: einen Längsschnitt durch einen Kunststoffschacht mit zwei Kabelverlegerohre vor deren Belegung;
- Figur 3: eine Darstellung ähnlich wie Figur 2 mit einer Belegung mit aufgeteilten Micropipe-Bündeln;
- Figur 4A: eine ähnliche Darstellung mit einer Belegung durch ein Fünfkant-Leerrohr;
- Figur 4B: einen vergrößerten Querschnitt des Fünfkant-Leerrohres.

Der Verschlussstopfen 1 für einen Kabelschacht 2 oder ein Kabelverlegerohr 12 enthält einen kreis-zylindrischen Stopfenschaft 3 und einen radial überstehenden, kreiszylindrischen Kopfabschnitt 4. Der Kopfabschnitt 4 hat eine geschlossene Stirnwand 5.

Mittig durch den Stopfenschaft 3 verlaufen drei stufenförmig kleiner werdende Vertiefungen 6, 7 und 8. Auf zwei konzentrischen Kreisen um diese Vertiefungen 6 bis 8 sind Sackbohrungen bzw. Vertiefungen 9 mit einem kleinen Durchmesser ausgebildet. Die Durchmesser der Vertiefungen 6 bis 8 betragen ca. 48, ca. 25 und ca. 12 mm, während die Durchmesser der kleinen Vertiefungen ca. 6 mm betragen.

Die Böden der Vertiefungen 9 und 8 haben eine Dicke von ca. 2 bis 4mm, so dass sie durch eingeführte Kabel oder Rohre leicht durchstoßen werden können. Die ringförmigen Böden der Vertiefungen 6 und 7 haben eine Dicke von ca. 30 und ca. 15 mm, so dass sie bei ihrer Belegung von der Stirnseite 5 des Kopfabschnitts 4 aus zweckmäßigerweise ausgeschnitten werden.

Um dies zu erleichtern, sind in der geschlossenen Stirnwand 5 zwei konzentrische Nuten 10, 11 ausgebildet, die mit den Rändern der Vertiefungen 6 und 7 fluchten.

Der Stopfenschaft 3 hat einen Durchmesser von ca. 110 mm, so dass er dicht in ein üblicherweise anzutreffendes Verlegerohr 12 eingreifen kann, das auf den Schaft aufschiebbar ist. Der Schaft 3 hat eine Länge von ca. 35 mm, während die Dicke des Kopfabschnitts ca. 15 mm beträgt.

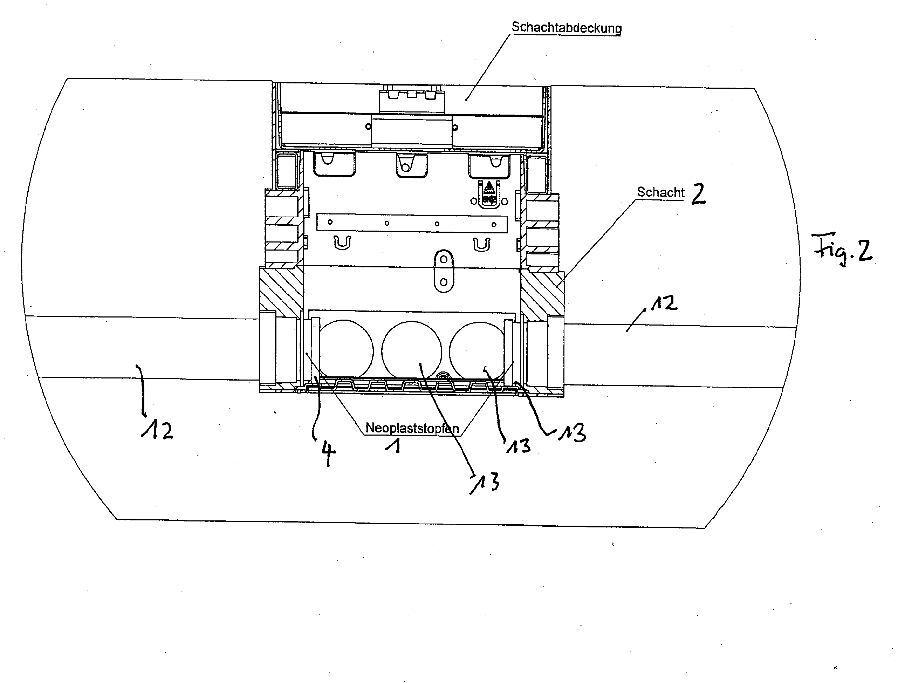

Figur 2 zeigt einen Längsschnitt durch einen Schacht 2, aus dessen gegenüber liegenden Seitenwänden zwei kreisförmige Fenster 13 heraus gebrochen sind. Zwei Stopfen 1 sind von der Innenseite des Schachtes aus dicht durch die Fenster 13 hindurch geführt, wobei die Kopfabschnitte 4 an den Innenwänden anliegen. Die beiden Stopfenschäfte dichten die Verlegerohre 12, die in dem Beispiel der Figur 2 noch nicht belegt sind, ab, so dass sie z.B. nicht versanden können, was ebenso für das Innere des Schachtes 2 zutrifft.

Der Verschlussstopfen kann ebenso von Außen aufgeschoben werden.

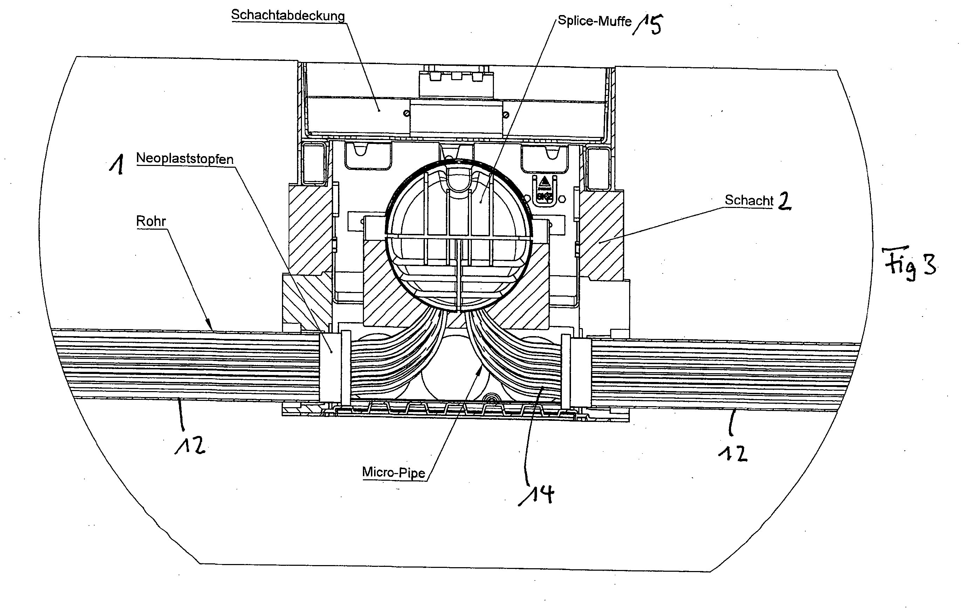

In Figur 3 sind zahlreiche Einzelkabel bzw. Micro-Pipes 14 durch die Verlegerohre 12 ins Schachtinnere geführt, wobei die Mikro-Pipes 14 jeweils durch die Sackbohrungen 9 verlaufen und auf diese Weise abgedichtet sind. Im Inneren des Schachtes 2 verlaufen die Micro-Pipes zu einer Spleiß-Muffe 15.

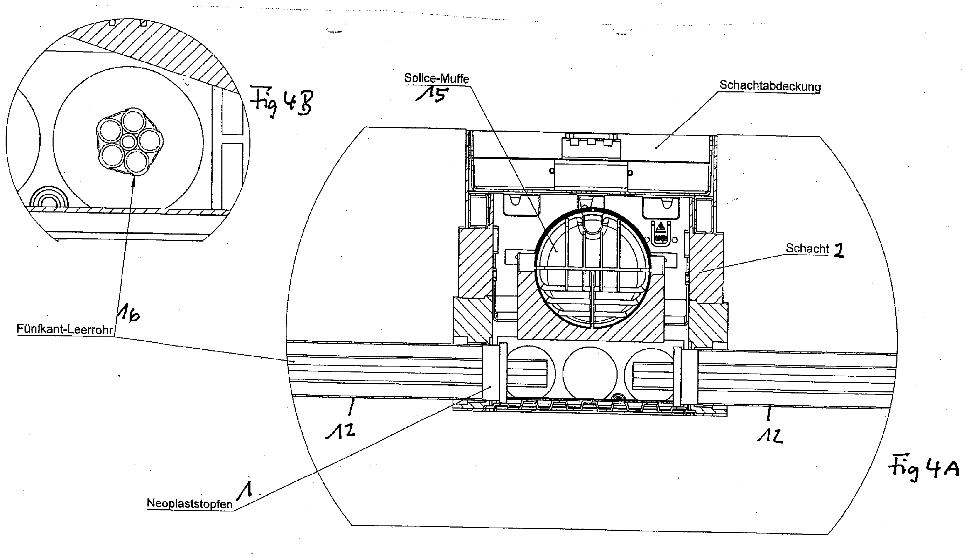

In Figur 4 sind zwei Fünfkant-Mikropipe-Bündel 16 durch die Kabelverlegerohre 12 und die Verschlussstopfen 1 hindurch geführt. Das Fünfkant-Mikropipe-Bündel verläuft durch eine der mittigen Vertiefungen 6 bis 8, die einen etwas kleineren Durchmesser hat als das Bündel 16. Da die Stopfen 1 aus Neopolen bestehen, sind sie so elastisch, dass sie den Umfang eines Fünfkant-Mikropipe-Bündels dicht umschließen können.

Es wird betont, dass die Erfindung nicht auf die beschriebenen und dargestellten Ausführungsformen beschränkt ist, Vielmehr sind alle offenbarten Merkmale auf jede sinnvolle Weise einzeln miteinander kombinierbar.

## Patentansprüche

1. Kabelverlegerohr (12) oder Kabelschacht (2) mit einer Wandöffnung (13, die durch einen Verschlussstopfen (1) abgedichtet sind, wobei der Verschlussstopfen (1) einen Stopfenschaft (3) und einen radial überstehenden Kopfabschnitt (4) aufweist,
wobei eine Vielzahl von sacklochförmigen Vertiefungen (6 bis 8) ausgehend von dem freien Ende des Stopfenschaftes (3) in axialer Richtung durch den Stopfenschaft (3) verläuft, die vor einer geschlossenen Stirnwand (5) des Kopfabschnitts (4) enden, **dadurch gekennzeichnet, dass** die Vielzahl von sacklochförmigen Vertiefungen (6 bis 8) dazu geeignet sind, hindurchgeführte Micropipes und/oder Rohre an den Wänden der sacklochförmigen Vertiefungen (6 bis 8) abzudichten, und
dass der Stopfen einstückig aus einem vorwiegend geschlossenzelligen Schaumstoff-Material besteht und im Spritzgussverfahren hergestellt ist.

2. Kabelverlegerohr (12) oder Kabelschacht (2) nach Anspruch 1,
**dadurch gekennzeichnet,**
**dass** das Schaumstoff-Material Neopolen ist.

3. Kabelverlegerohr (12) oder Kabelschacht (2) nach Anspruch 1 oder 2,
**dadurch gekennzeichnet,**
**dass** der Stopfenschaft (3) wenigstens zwei, vorzugsweise drei konzentrische größere Vertiefungen (6 bis 8) aufweist, deren Querschnittsabmessungen sich zum Kopfabschnitt (4) hin stufenförmig verringern.

4. Kabelverlegerohr (12) oder Kabelschacht (2) nach Anspruch 3,
**dadurch gekennzeichnet,**
**dass** die Durchmesser der größeren Vertiefungen (6 bis 8) ca. 48 mm, ca. 25 mm und ca. 12 mm, und der Durchmesser des Stopfenschaftes (3) ca. 110 mm betragen.

5. Kabelverlegerohr (12) oder Kabelschacht (2) nach Anspruch 3 oder 4,
**dadurch gekennzeichnet,**
**dass** die Vertiefungen (6 bis 8) mittig durch den Stopfenschaft verlaufen.

6. Kabelverlegerohr (12) oder Kabelschacht (2) nach einem der Ansprüche 1 bis 5,
**dadurch gekennzeichnet,**
**dass** radial außerhalb der größeren Vertiefungen (6 bis 8) mehrere kleine Vertiefungen (9) durch den Stopfenschaft verlaufen, die sich bis in den Kopfabschnitt (4) erstrecken und ca. 2 bis 4 mm vor der geschlossenen Stirnwand (5) enden.

7. Kabelverlegerohr (12) oder Kabelschacht (2) nach Anspruch 6,
**dadurch gekennzeichnet,**
**dass** die kleinen Vertiefungen (9) auf zwei konzentrischen Kreisen angeordnet sind.

8. Kabelverlegerohr (12) oder Kabelschacht (2) nach einem der Ansprüche 6 oder 7,
**dadurch gekennzeichnet,**
**dass** der Durchmesser der kleinen Vertiefungen (9) ca. 6 mm beträgt, und dass vierundzwanzig kleine Vertiefungen (9) ausgebildet sind.

9. Kabelverlegerohr (12) oder Kabelschacht (2) nach einem der Ansprüche 1 bis 8,
**dadurch gekennzeichnet,**
**dass** die geschlossene Stirnwand (5) zwei konzentrische Markierungen (10, 11) aufweist, die mit den Rändern der beiden größten Vertiefungen (6, 7) fluchten.

10. Kabelverlegerohr (12) oder Kabelschacht (2) nach Anspruch 9,
**dadurch gekennzeichnet,**
**dass** die Markierungen (10, 11) durch Nuten in der Stirnwand (5) gebildet sind.

11. Kabelverlegerohr (12) oder Kabelschacht (2) nach einem der Ansprüche 1 bis 10,
**dadurch gekennzeichnet,**
**dass** mit dem Stopfen (1) ein Kabelverlegerohr (12) mit einem Durchmesser von bevorzugt 110 mm und die Durchführung von Kabeln (14) durch eine bevorzugt 110 mm Wandöffnung (1) eines Schachtes abgedichtet werden kann.

## Claims

1. A cable conduit (12) or cable duct (2) with a wall opening (13, which is sealed by a closure plug (1), wherein the closure plug (1) has a plug shaft (3) and a radially projecting head section (4), wherein a plurality of blind recesses (6 to 8) extend in the axial direction through the plug shaft (3) starting from the free end of the plug shaft (3),which terminate before a closed end wall (5) of the head section (4), **characterised in that** the plurality of blind recesses (6 to 8) are suitable for sealing Micropipes and/or tubes passed through at the walls of the blind recesses (6 to 8) and that the plug is in one piece and consists of a predominantly closed cell foam material and is produced in an injection moulding process.

2. A cable conduit (12) or cable duct (2) as claimed in Claim 1, **characterised in that** the foamed material is Neopolen.

3. A cable conduit (12) or cable duct (2) as claimed in Claim 1 or 2, **characterised in that** the plug shaft (3) has at least two, preferably three, concentric, relatively large recesses (6 to 8), the cross-sectional dimensions of which decrease in a stepped manner towards the head section (4).

4. A cable conduit (12) or cable duct (2) as claimed in Claim 3, **characterised in that** the diameter of the relatively large recesses (6 to 8) is ca. 48 mm, ca. 25 mm and ca. 12 mm and the diameter of the plug shaft (3) is ca. 110 mm.

5. A cable conduit (12) or cable duct (2) as claimed in Claim 3 or 4, **characterised in that** the recesses (6 to 8) extend centrally through the plug shaft.

6. A cable conduit (12) or cable duct (2) as claimed in one of Claims 1 to 5, **characterised in that** extending through the plug shaft radially outside the relatively large recesses (6 to 8) there is a plurality of small recesses (9), which extend into the head section (4) and terminate ca. 2 to 4 mm before the closed end wall (5).

7. A cable conduit (12) or cable duct (2) as claimed in Claim 6, **characterised in that** the small recesses (9) are arranged on two concentric circles.

8. A cable conduit (12) or cable duct (2) as claimed in one of Claims 6 or 7, **characterised in that** the diameter of the small recesses (9) is ca. 6 mm and that twenty-four small recesses (9) are formed.

9. A cable conduit (12) or cable duct (2) as claimed in one of Claims 1 to 8, **characterised in that** the closed end wall (5) has two concentric markings (10, 11), which are aligned with the edges of the two largest recesses (6, 7).

10. A cable conduit (12) or cable duct (2) as claimed in Claim 9, **characterised in that** the two markings (10, 11) are formed by grooves in the end wall (5).

11. A cable conduit (12) or cable duct (2) as claimed in one of Claims 1 to 10, **characterised in that** a cable conduit (12) with a diameter of preferably 110 mm and the passing through of cables (14) through a preferably 110 mm wall opening (1) in a duct can be sealed with the stopper (1).

## Revendications

1. Tube de pose de câbles (12) ou passe-câbles (2) avec une ouverture de paroi (13), qui sont rendus étanches par un bouchon de fermeture (1), dans lequel le bouchon de fermeture (1) présente un arbre de bouchon (3) et une section de tête (4) dépassant radialement,
dans lequel
s'étend une pluralité d'évidements (6 à 8) en forme de trou borgne partant de l'extrémité libre de l'arbre de bouchon (3) dans la direction axiale par l'arbre de bouchon (3), qui se terminent devant une paroi frontale fermée (5) de la section de tête (4), **caractérisé en ce**
**que** la pluralité d'évidements (6 à 8) en forme de trou borgne sont adaptés pour rendre étanche au niveau des parois des évidements (6 à 8) en forme de trou borgne des micro-conduits et/ou tubes menés à travers celles-ci, et
**que** le bouchon est constitué d'un seul tenant en un matériau expansé principalement à cellules fermées et est fabriqué selon le procédé de moulage par injection.

2. Tube de pose de câbles (12) ou passe-câbles (2) selon la revendication 1,
**caractérisé en ce**
**que** le matériau expansé est du néopolène.

3. Tube de pose de câbles (12) ou passe-câbles (2) selon la revendication 1 ou 2,
**caractérisé en ce**
**que** l'arbre de bouchon (3) présente au moins deux, de préférence trois plus grands évidements (6 à 8) concentriques, dont les dimensions de coupe transversale diminuent de manière étagée vers la section de tête (4).

4. Tube de pose de câbles (12) ou passe-câbles (2) selon la revendication 3,
**caractérisé en ce**
**que** les diamètres des plus grands évidements (6 à 8) font environ 48 mm, environ 25 mm et environ 12 mm, et le diamètre de l'arbre de bouchon (3) fait environ 110 mm.

5. Tube de pose de câbles (12) ou passe-câbles (2) selon la revendication 3 ou 4,
**caractérisé en ce**
**que** les évidements (6 à 8) s'étendent au milieu à travers l'arbre de bouchon.

6. Tube de pose de câbles (12) ou passe-câbles (2) selon l'une quelconque des revendications 1 à 5,
**caractérisé en ce**
**que** s'étendent radialement à l'extérieur des plus grands évidements (6 à 8) plusieurs petits évidements (9) à travers l'arbre de bouchon, qui s'étendent jusque dans la section de tête (4) et se terminent environ 2 à 4 mm devant la paroi frontale fermée (5).

7. Tube de pose de câbles (12) ou passe-câbles (2) selon la revendication 6,
**caractérisé en ce**
**que** les petits évidements (9) sont agencés sur deux cercles concentriques.

8. Tube de pose de câbles (12) ou passe-câbles (2) selon l'une quelconque des revendications 6 ou 7,
**caractérisé en ce**
**que** le diamètre des petits évidements (9) fait environ 6 mm, et que vingt-quatre petits évidements (9) sont formés.

9. Tube de pose de câbles (12) ou passe-câbles (2) selon l'une quelconque des revendications 1 à 8,
**caractérisé en ce**
**que** la paroi frontale fermée (5) présente deux marquages concentriques (10, 11), qui sont alignés avec les bords des deux évidements les plus grands (6, 7).

10. Tube de pose de câbles (12) ou passe-câbles (2) selon la revendication 9,
**caractérisé en ce**
**que** les marquages (10, 11) sont formés par des rainures dans la paroi frontale (5).

11. Tube de pose de câbles (12) ou passe-câbles (2) selon l'une quelconque des revendications 1 à 10,
**caractérisé en ce**
**qu'**un tube de pose de câbles (12) d'un diamètre de préférence de 110 mm et le passage de câbles (14) par une ouverture de paroi (1) de préférence de 110 mm d'un puits peuvent être rendus étanches avec le bouchon (1).
